# NEUE EUROPÄISCHE PATENTSCHRIFT

(11) **EP 1 723 026 B2**
(45) Veröffentlichungstag und Bekanntmachung des Hinweises auf die Entscheidung über den Einspruch: **17.10.2012**
(45) Hinweis auf die Patenterteilung: 01.10.2008
(21) Anmeldenummer: 03782309.3
(22) Anmeldetag: 04.12.2003
(51) Int. Cl.: B62D 11/14, B62D 11/04

(54) **ELEKTRISCHES LENK- UND ANTRIEBSSYSTEM FÜR EIN FAHRZEUG MIT RADSEITENLENKUNG**
ELECTRIC STEERING AND DRIVING SYSTEM FOR A SKID-STEER VEHICLE
SYSTEME DE DIRECTION ET D'ENTRAINEMENT ELECTRIQUE POUR UN VEHICULE A BRAQUAGE DES ROUES

(43) Veröffentlichungstag der Anmeldung: 22.11.2006
(73) Patentinhaber: Renk Aktiengesellschaft, 86159 Augsburg (DE)
(72) Erfinder: WALTER, Alexander, 86161 Augsburg (DE)
(74) Vertreter: Grünberger, Christian Thomas
(86) Internationale Anmeldenummer: PCT/EP2003/013737
(87) Internationale Veröffentlichungsnummer: WO 2005/054041

(56) Entgegenhaltungen:
- EP-A- 1 060 941
- WO-A-02/083483
- DE-A- 10 005 527
- PATENT ABSTRACTS OF JAPAN Bd. 0113, Nr. 60 (M-645), 25. November 1987 (1987-11-25) & JP 62 137281 A (TOSHIBA CORP), 20. Juni 1987 (1987-06-20)
- NAUNHEIMER, H: 'Electric drive system for tracked vehicles' 3RD INTERNATIONAL AECV CONFERENCE (FOLIEN VON CD) DE,
- WALTER, DR.-ING. A.: 'Safety requirements for the electro-mechanical transmission' 5TH INTERNATIONAL AECV CONFERENCE (FOLIEN VON CD) FR, Seiten 1 - 27
- WALTE, DR.-ING. A.: 'Safety requirements for the elctro.mechanical transmission' 5TH INTERNATIONAL AECV CONFERENCE (ARTIKEL VON CD) FR, Seiten 1 - 10
- 'Electric Vehicle Committee Passenger Car Activity: Electric and Hybrid Vehicles, PT-2', 1981, SAE, WARRENDALE, PA, USA, ISBN 0-89883-109-1 Artikel GELB, G.H. ET AL: 'An electromechanical transmission for hybrid vehicle power trains-design and dynamometer testing', Seiten 145 - 146
- NAUNHEIMER ET AL: 'Electric drive system for tracked vehicles, Session 06-01' 3RD INTERNATIONAL AECV CONFERENCE 23 September 1999, DE,
- PARSONS, M.: 'Hybrid electric vehicle simulation' AECV CONFERENCE September 1999, Seiten 1 - 4,7
- JOHNSON, C.: 'Electrifying the arsenal' POPOLAR MECHANICS März 2001 - April 2001, Seiten 70 - 72

## Beschreibung

Die Erfindung betrifft ein elektrisches Lenk- und Antriebssystem für ein Fahrzeug mit Radseitenlenkung gemäß Patentanspruch 1.
Fahrzeuge mit Radseitenlenkung fahren Kurven, indem die eine Antriebsseite mit einer anderen Geschwindigkeit angetrieben wird als die andere. Die Radseitenlenkung ist hauptsächlich bei Kettenfahrzeugen im Einsatz. Die Antriebseinrichtung treibt zur Kurvenfahrt die kurvenäußere Fahrkette mit einer höheren Geschwindigkeit an als die kurveninnere und übernimmt damit neben der Antriebsaufgabe zusätzlich auch die Lenkfunktion des Fahrzeugs. Zum Drehen eines solchen Fahrzeuges auf der Stelle können die Fahrketten der beiden Fahrzeug-seiten in entgegengesetzter Richtung angetrieben werden.
Da bei solchen Fahrzeugen bei Ausfall oder Problemen mit der Antriebsanlage auch die Lenkung ausfällt, müssen besondere Maßnahmen getroffen werden, um das Fahrzeug zumindest sicher bis zum Stillstand zu bringen. Bei militärischen Fahrzeugen sind die Anforderungen noch höher. Solche Fahrzeuge sollen auch bei teilweiser Beschädigung ihres Antriebssystems noch fahr- und lenkbar sein, um sich ggf. zwar mit verminderter Antriebsleistung, aber aus eigener Kraft beispielsweise aus einer Gefahrenzone heraus zu bewegen.

Die DE 37 28 171 beschreibt eine elektro-mechanische Antriebsanlage für Vollkettenfahrzeuge. Zur Erzeugung der elektrischen Leistung ist ein Generator vorgesehen, der von einer Brennkraftmaschine angetrieben wird. Gemäß einer Ausführung besteht dieses Antriebssystem aus einem elektrischen Fahrmotor, der beide Fahrzeug-Seiten über eine Zentralwelle in die gleiche Richtung antreibt und einem elektrischen Lenkmotor, der eine Nullwelle antreibt, deren Drehzahl auf die eine Seite positiv und auf die andere Seite negativ wirkt. Lenkdifferentiale links und rechts addieren die Drehzahlen der beiden Motoren und leiten die Summe weiter an die Kettenräder. Diese elektromechanische Lenkanlage kann ein mehrfaches der Lenkmotor-Nennleistung als sogenannte "regenerative Leistung" von der kurveninneren Antriebsseite zur kurvenäußeren Antriebsseite übertragen. Durch diesen elektro-mechanischen Leistungstransfer fließt die Blindleistung über die mechanische Getriebeanordnung und nicht über die Elektromotoren, so dass diese entsprechend der Primärleistung des Fahrzeugs ausgelegt werden können.
Eine weitere Ausführung dieses Dokumentes sieht einen Fahrelektromotor vor, der den Träger eines Kegelrad-Differentialgetriebes antreibt. An beiden Abtriebswellen des Kegelrad-Differentialgetriebes, die mit den Kettenrädern des Fahrzeugs verbunden sind, ist ein Lenkelektromotor vorgesehen. Bei dieser Anordnung können die Lenkelektromotoren zur Unterstützung des Fahrantriebes mitbenutzt werden. Die drei Elektromotoren können deshalb kleiner ausgelegt werden. Bei dieser Anordnung kann jedoch keine Antriebsleistung von einer zur anderen Antriebsseite mechanisch übertragen werden.
Eine ähnliche Anordnung ist aus der WO 02/083483, die den Oberbegriff der Ansprüche 1 und 2 definiert, bekannt, wobei zwischen den beiden Antriebsseiten ein aus zwei Planetengetrieben bestehendes Differentialgetriebe vorgesehen ist. Die zwei Planetengetriebe sind nebeneinander angeordnet und ihre Planetenträger sind drehfest miteinander gekoppelt. Ein elektrischer Lenkmotor kann die beiden Sonnenräder in entgegengesetzter Drehrichtung antreiben und die Planetengetriebe treiben über ihre Hohlräder ab. Die Hohlräder sind mit einem ersten Ende von Motorwellen von elektrischen Fahrmotoren verbunden. An den anderen Enden der Motorwellen sind die Kettenantriebsräder oder Räder angeordnet. Bei Ausfall des einzigen Stromversorgungskreises kann ein Fahrzeug mit einer solchen Antriebsachse nicht mehr gelenkt werden.
Aus der EP 1 060 941 B1 ist eine Einrichtung für die Ansteuerung und den Betrieb eines elektrischen Fahrzeugantriebs bekannt. Das Fahrzeug besitzt Stromerzeugungseinrichtungen sowie Einrichtungen zur Erfassung der Bediensignale des Fahrers zum Fahren, Bremsen und Lenken. Über Einrichtungen zur elektronischen Signalverarbeitung werden die Bediensignale zu Leistungseinheiten weitergeleitet, welche elektrische Fahrmotoren ansteuern.
Für jede Antriebsseite ist ein Antriebsmotor vorgesehen, dem jeweils eine Leistungseinheit zugeordnet ist. Jeder Antriebsmotor und Leistungseinheit ist jeweils in mindestens zwei Teilmotore bzw. Teileinheiten aufgeteilt. Die Teileinheiten der Leistungseinheiten und die Teilmotoren der beiden Antriebsseiten sind so miteinander verbunden, dass jede Leistungseinheit jeweils mindestens einen Teilmotor jedes vorhandenen Antriebsmotors ansteuern kann.
Da bei diesem elektrischen Fahrzeugantrieb keine mechanische Kopplung zwischen den beiden Antriebsseiten vorgesehen ist, muss die regenerative Lenkleistung rein elektrisch von einer zur anderen Antriebsseite übertragen werden. Die Fahrmotoren müssen dabei nicht nur nach der im Fahrzeug vorhandenen Stromerzeugungseinrichtung ausgelegt werden, sondern müssen zusätzlich auch die regenerative Leistung aufnehmen können, welche von der kurveninneren zur kurvenäußeren Antriebsseite fließt. Dies erfordert überdimensionierte Elektromotore und aufwendige Verkabelungen für entsprechend großen elektrischen Ströme.

Auch die DE 100 05 527 A1 zeigt ein elektrisches Lenk- und Antriebssystem für ein Kettenfahrzeug, bei dem jeder Fahrantrieb eines Antriebselementes für eine Fahrkette zwei über ein Summiergetriebe gekoppelte Elektromotoren umfasst, die aus voneinander unabhängigen Generatoren mit elektrischem Strom versorgbar sind. Eine Differentialgetriebeanordnung oder ein damit antriebsverbundener Lenkantrieb ist in der DE 100 05 527 A1 wie in der vorgenannten EP 1 060 941 B1 nicht vorgesehen.

Die Aufgabe der Erfindung ist es, ein elektrisches Lenk- und Antriebssystem für ein Fahrzeug mit Radseitenlenkung und mit einer Differentialgetriebeanordnung zwischen den beiden Antriebsseiten zu schaffen, welches eine erhöhte Betriebssicherheit aufweist.

Diese Aufgabe wird erfindungsgemäß durch die kennzeichnenden Merkmale des Patentanspruchs 1 bzw.2 gelöst.

Durch das erfindungsgemäße Lenk- und Antriebssystem kann ein Fahrzeug auch bei Ausfall von einzelnen Antriebselementen weiterhin fahren und gelenkt werden. Weitere Merkmale und Vorteile ergeben sich aus den Unteransprüchen in Verbindung mit der Beschreibung.

Die Erfindung wird nachfolgend anhand der zugehörigen schematischen Zeichnung näher erläutert. Die
- Fig. 1: zeigt ein Blockschaltbild einer ersten Ausführung des erfindungsgemäßen Antriebssystems,
- Fig. 2: zeigt eine weitere Ausführung des erfindungsgemäßen Antriebssystems und
- Fig. 3: zeigt eine weitere Ausführung des erfindungsgemäßen Antriebssystems.

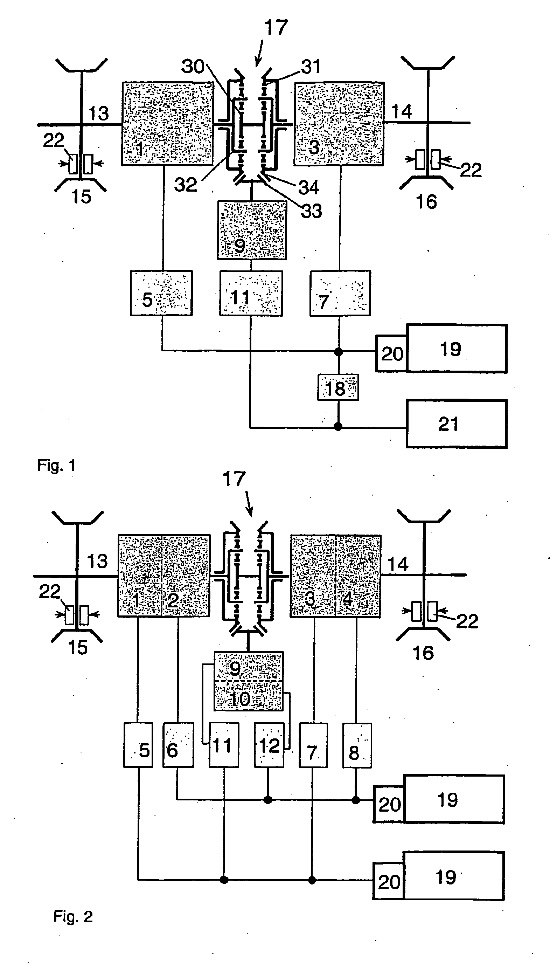

In Fig. 1 ist eine Antriebsachse des erfindungsgemäßen elektrischen Lenk- und Antriebssystems für ein Kettenfahrzeug dargestellt. Statt der Kettenräder 15, 16 können auch Räder eines Radfahrzeuges vorgesehen werden.

Zur Erzeugung der elektrischen Antriebsleistung ist wenigstens eine Energiequelle erforderlich. In diesem Beispiel ist eine Brennkraftmaschine 19 vorgesehen, die einen Stromgenerator 20 antreibt. Als zweite unabhängige Energiequelle steht ein Akkumulator 21 (oder ähnlicher Energiespeicher) zur Verfügung.
Für beide Antriebsseiten des Fahrzeugs ist jeweils ein Elektromotor 1, 3 als Fahrantrieb vorgesehen. Die Wellen 13, 14 der Elektromotoren sind durchgehend und treten an den beiden Enden der Motoren 1, 3 aus. Das erste Ende der Wellen 13, 14 ist jeweils mit einem Kettenrad 15, 16 als Antriebselement für eine Fahrkette verbunden. Die jeweils zweiten Enden der Wellen 13, 14 sind mit einer Differentialgetriebeanordnung 17 verbunden. Die Fahrmotoren 1, 3 werden von Leistungseinheiten 5, 7 angesteuert, welche ihrerseits vom Generator 20 mit Strom versorgt werden.
Die Differentialgetriebeanordnung 17 besteht aus zwei Planetengetrieben, die nebeneinander angeordnet sind. Die Sonnenräder 30 der beiden Planetengetriebe sind mit einer Welle drehfest miteinander gekoppelt. Die Planetenträger 32 sind mit den Wellen 13, 14 der Fahrmotoren 1, 3 verbunden. Ein elektrischer Lenkantrieb treibt über ein Kegelritzel 33 und Kegelräder 34 die Hohlräder 31 der Planetengetriebe in entgegengesetzter Richtung an.
Der Lenkantrieb besteht aus einem Elektromotor 9 der von einer Leistungseinheit 11 angesteuert wird, welche ihrerseits aus dem Akkumulator 21 mit Strom versorgt wird.
Der Akkumulator 21 wird im Normalbetrieb durch einen Energiewandler 18 ausgehend vom Generator 2 geladen. Der Energiewandler enthält eine Schutzeinrichtung, die bei einem Defekt im System Generator und Akkumulator trennt. Damit stellen der Akkumulator 21 und die Brennkraftmaschine 19 mit dem Generator 20 zwei unabhängige Energiequellen im Sinne dieser Erfindung dar.
Ein Energiewandler 1.8 wandelt die von einem Generator erzeugte elektrische Energie so um, dass diese zur Aufladung eines Akkumulators 21 genutzt werden kann. '
Bei einem Ausfall einer beliebigen elektrischen Komponente des Systems kann die Lenkfähigkeit des Fahrzeugs zumindest bis zum Ausrollen sichergestellt werden.
Fällt der Lenkmotor 9, dessen Leistungseinheit 11, der Akkumulator 21 oder der Energiewandler 18 aus, dann kann durch gezielte Einstellung unterschiedlicher Drehzahlen an den beiden Fahrmotoren 1, 3 das Fahrzeug noch immer gelenkt werden.
Fällt ein Fahrmotor 1, 3 oder deren Leistungseinheit 5, 7 oder der Generator 20 oder die Brennkraftmaschine 19 aus, dann trennt der Energiewandler 18 den Akkumulator 21 und den Lenkmotor 9 vom Fahrsystem. Der Lenkmotor 9 erhält nun aus dem Akkumulator 21 die benötigte Leistung, um die Lenkung weiter sicher zu stellen.

Der Akkumulator 21 muss in seiner Kapazität ausreichend ausgelegt sein, um die Lenkung unabhängig von anderen Energiequellen sicher zu stellen. Da ein defekter Motor 1, 3 oder 9 auch einen Bremswiderstand gegen die Drehung seiner Welle ausüben kann, muss diese Bremsleistung ebenfalls bei der Auslegung des Antriebssystems berücksichtigt werden.

In Fig. 2 ist eine weitere erfindungsgemäße Ausführung des elektrischen Lenk-und Antriebssystems dargestellt. Statt der Kettenräder 15, 16 können auch Räder eines Radfahrzeuges vorgesehen werden.
Die mechanische Anordnung der Fahr- und Lenkmotoren an der Differentialgetriebeanordnung 17 wurde bereits zur Fig. 1 erläutert.
Zur Erzeugung der elektrischen Antriebsleistung ist wenigstens eine Stromerzeugungseinrichtung erforderlich. In diesem Beispiel sind wenigstens zwei Brennkraftmaschinen 19 vorgesehen, die jeweils einen Stromgenerator 20 antreiben. Als Brennkraftmaschine 19 werden vorzugsweise Dieselmotoren eingesetzt. Es sind jedoch auch Brennstoffzellen und (Not-)Batterien (Akkumulatoren) als Stromerzeugungseinrichtung oder Energiespeicher denkbar. Es ist auch möglich, mehrere Generatoren an eine Brennkraftmaschine oder einen Generator an mehrere Brennkraftmaschinen anzuschließen.
Für beide Antriebsseiten des Fahrzeugs sind jeweils wenigstens zwei Elektromotoren 1, 2 und 3, 4 als Fahrantrieb vorgesehen, die aus verschiedenen Energiequellen versorgt werden. Die Fahrmotoren 1, 3 werden von Leistungseinheiten 5, 7 angesteuert, welche ihrerseits von einem Generator 20 mit Strom versorgt werden. Die Fahrmotoren 2, 4 werden von Leistungseinheiten 6, 8 angesteuert, welche ihrerseits von einem anderen Generator 20 mit Strom versorgt werden.
Statt zweier Elektromotoren 1, 2 bzw. 3, 4 als Fahrantrieb können auch Elektromotoren mit wenigstens zwei voneinander unabhängigen Stromkreisen vorgesehen werden.
Der Lenkantrieb besteht aus wenigstens zwei Elektromotoren 9, 10 oder aus einem Elektromotor mit wenigstens zwei voneinander unabhängigen Stromkreisen. Die beiden Teilmotoren 9, 10 des Lenkantriebes werden jeweils von einer Leistungseinheit 11, 12 angesteuert, welche ihrerseits durch verschiedene Generatoren 20 mit Strom versorgt werden.
Falls einer der Lenk-Elektromotoren 9, 10 ausfällt, kann das Fahrzeug weiterhin mit der Leistung des anderen Lenkmotors 10 bzw. 9 gelenkt werden.
Zwischen den verschiedenen Teil-Motoren des Fahrantriebs 1, 2 und 3, 4 sowie 9 und 10 bzw. zwischen den verschiedenen Stromkreisen des Lenkantriebs sind vorzugsweise Feuerschotte als Isolation gegen Feuer vorgesehen. Falls einer der Motoren oder einer der verschiedenen Stromkreise, beispielsweise durch Überhitzung, in Brand gerät, ist der andere zumindest für eine bestimmte Zeit geschützt und kann weiter betrieben werden. Unter dem Begriff Feuerschott sind Abtrennungen aus feuerfestem oder feuerhemmendem Material zu verstehen. Dies beinhaltet auch Schutz des einen (Teil-)Motors vor übermäßiger Hitzeentwicklung des anderen (Teil-)Motors.

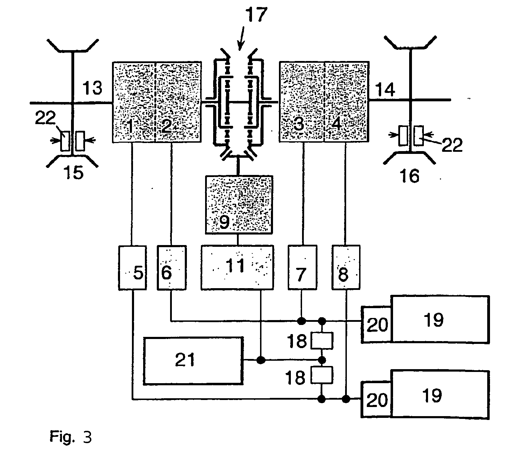

Die in Fig. 3 dargestellte Ausführung des erfindungsgemäßen Antriebssystems entspricht im wesentlichen der Ausführung gemäß Fig. 2, wobei jedoch nur ein Lenkmotor 9 vorgesehen ist, der an einer unabhängigen Energiequelle angeschlossen ist. Für jede Antriebsseite ist ein Fahrantrieb vorgesehen, die jeweils aus mindestens zwei elektrischen Fahrmotoren 1, 2 und 3, 4 bestehen. Die Fahrmotoren 1, 2 und 3, 4 werden jeweils von separaten Leistungseinheiten 5, 6 und 7, 8 angesteuert, welche vorzugsweise paarweise von verschiedenen Stromgeneratoren 20 mit Strom versorgt werden.
Der Akkumulator 21 kann durch die Generatoren 20 über die Energiewandler 18 geladen werden. Im Fehlerfall können die bereits erwähnten Schutzeinrichtungen im Energiewandler den Lenkmotor 9 mit seiner Energiequelle von den Stromkreisen der Fahrmotoren trennen.
Bei einem Defekt im System einer der Energiequellen kann dieses komplette System ausgeschaltet werden und mit den beiden verbleibenden Systemen weiter gefahren werden.
Statt der zu den Fig. 1 bis 3 beschriebenem Differentialgetriebeanordnung 17 kann auch eine andere gleichwirkende vorgesehen werden. Beispielsweise auch solche wie sie aus der WO 02/083483 A1 gemäß den Fig. 2 und 3 bekannt sind.

Als elektrische Stromquellen können auch Brennstoffzellen oder Energiespeicher wie z.B. Batterien, Akkumulatoren oder Schwungradspeicher vorgesehen werden.

An den Antriebswellen 13, 14 werden vorzugsweise jeweils getrennt voneinander ansteuerbare mechanische Reibungsbremsen 22 vorgesehen. Bei Ausfall der bisher beschriebenen Energieversorgungssysteme können diese Reibungsbremsen 22 als Notlenkeinrichtung benutzt werden. Zur Betätigung der Reibungsbremsen 22 kann eine weitere unabhängige Energiequelle vorgesehen werden. Bei hydraulisch betätigten Bremsen 22 kann diese Energiequelle zum Beispiel ein Druckspeicher sein, der über eine Pumpe befüllt wird. Die Pumpe kann redundant an verschiedene Versorgungskreise angeschlossen sein und baut im Druckspeicher den entsprechenden Druck auf, der ausreicht um das Fahrzeug sicher abbremsen zu können. Bei Ausfall der Pumpe oder ihres Stromversorgungskreises hält der Druckspeicher den aufgebauten Bremsdruck.
Durch die getrennte voneinander unabhängige Ansteuerbarkeit der Bremsen 22 können die Fahrketten oder Räder der beiden Antriebsseiten gezielt auf unterschiedliche Geschwindigkeiten abgebremst werden und somit ist eine (Not-)Lenkfunktion möglich.

### Bezugszeichenliste

- 1: Fahrantrieb/Fahrmotor
- 2: Fahrantrieb/Fahrmotor
- 3: Fahrantrieb/Fahrmotor
- 4: Fahrantrieb/Fahrmotor
- 5: Leistungseinheit für Fahrantrieb/Fahrmotor
- 6: Leistungseinheit für Fahrantrieb/Fahrmotor
- 7: Leistungseinheit für Fahrantrieb/Fahrmotor
- 8: Leistungseinheit für Fahrantrieb/Fahrmotor
- 9: Lenkantrieb/Lenkmotor
- 10: Lenkantrieb/Lenkmotor
- 11: Leistungseinheit für Lenkantrieb/Lenkmotor
- 12: Leistungseinheit für Lenkantrieb/Lenkmotor
- 13: Welle
- 14: Welle
- 15: Kettenrad
- 16: Kettenrad
- 17: Differentialgetriebeanordnung
- 18: Energiewandler
- 19: Brennkraftmaschine (Dieselmotor)
- 20: Generator
- 21: Akkumulator
- 22: (Reibungs-)Bremse

- 30: Sonnenrad
- 31: Hohlrad
- 32: Planetenträger
- 33: Kegelritzel
- 34: Kegelrad

## Patentansprüche

1. Elektrisches Lenk- und Antriebssystem für ein Fahrzeug mit Radseitenlenkung mit Antriebselementen für Fahrketten (15, 16) oder für Räder und mit zwei Antriebswellen (13, 14), deren erstes Ende mit dem Antriebselement (15; 16) der jeweils einen Fahrzeugseite verbunden ist und deren zweites Ende mit einer Differentialgetriebeanordnung (17) verbunden ist und mindestens einem Fahrantrieb (1,2,3,4) der mit mindestens einer der beiden Antriebswellen (15, 16) verbunden ist, sowie mit einem elektrischen Lenkantrieb (9, 10), der in Antriebsverbindung mit der Differentialgetriebeanordnung (17) steht, **dadurch gekennzeichnet, dass**
mindestens zwei voneinander unabhängige Energiequellen (19,20,21) vorgesehen sind, alle Fahrantriebe aus mindestens einer dieser unabhängigen Energiequellen mit elektrischem Strom versorgbar sind, und dass der Lenkantrieb aus einer anderen dieser unabhängigen Energiequellen mit elektrischem Strom versorgbar ist.

2. Elektrisches Lenk- und Antriebssystem für ein Fahrzeug mit Radseitenlenkung mit Antriebselementen für Fahrketten (15, 16) oder für Räder und mit zwei Antriebswellen (13, 14), deren erstes Ende mit dem Antriebselement (15; 16) der jeweils einen Fahrzeugseite verbunden ist und deren zweites Ende mit einer Differentialgetriebeanordnung (17) verbunden ist und mindestens einem Fahrantrieb (1,2,3,4) der mit mindestens einer der beiden Antriebswellen (15, 16) verbunden ist, sowie mit einem elektrischen Lenkantrieb (9, 10), der in Antriebsverbindung mit der Differentialgetriebeanordnung (17) steht, **dadurch gekennzeichnet, dass**
mindestens zwei voneinander unabhängige Energiequellen (19,20,21) vorgesehen sind, alle Fahrantriebe aus mindestens einer dieser unabhängigen Energiequellen versorgbar sind, und dass der Lenkantrieb aus wenigstens zwei Elektromotoren (9,10) oder aus einem Elektromotor mit wenigstens zwei voneinander unabhängigen Stromkreisen besteht, wobei die wenigstens zwei Elektromotoren bzw. unabhängigen Stromkreisen aus den mindestens zwei voreinander unabhängigen Energiequellen (19,20,21) mit elektrischem Strom versorgbar sind.

3. Elektrisches Lenk- und Antriebssystem nach Anspruch 2, **dadurch gekennzeichnet, dass** der Lenkantrieb aus wenigstens zwei Elektromotoren (9, 10) oder aus einem Elektromotor mit wenigstens zwei voneinander unabhängigen Stromkreisen besteht und für beide Antriebwellen (15,16) des Fahrzeuges jeweils mindestens ein elektrischer Fahrantrieb (1, 2, 3, 4) vorgesehen ist.

4. Elektrisches Lenk- und Antriebssystem nach Anspruch 1, **dadurch gekennzeichnet, dass** der Lenkantrieb aus einem Elektromotor (9) besteht und für beide Antriebswellen (13,14) des Fahrzeuges jeweils ein elektrischer Fahrantrieb vorgesehen ist, der jeweils aus wenigstens zwei Elektromotoren (1, 2; 3, 4) oder aus einem Elektromotor mit wenigstens zwei voneinander unabhängigen Stromkreisen besteht.

5. Elektrisches Lenk- und Antriebssystem nach Anspruch 1 oder 2, **dadurch gekennzeichnet, dass** für beide Antriebswellen (13,14) des Fahrzeuges jeweils ein elektrischer Fahrantrieb vorgesehen ist, der jeweils aus wenigstens zwei Elektromotoren (1, 2; 3, 4) oder aus einem Elektromotor mit wenigstens zwei voneinander unabhängigen Stromkreisen besteht.

6. Elektrisches Lenk- und Antriebssystem nach einem der vorangehenden Ansprüche, **dadurch gekennzeichnet, dass** mindestens ein Generator (20) zur Erzeugung von elektrischem Strom vorgesehen ist, der von mindestens einer Brennkraftmaschine (19) angetrieben wird.

7. Elektrisches Lenk- und Antriebssystem nach einem der vorangehenden Ansprüche, **dadurch gekennzeichnet, dass** mindestens eine Brennstoffzelle oder ein Energiespeicher (21) als elektrische Stromquelle vorgesehen ist.

8. Elektrisches Lenk- und Antriebssystem nach einem der vorangehenden Ansprüche, **dadurch gekennzeichnet, dass** zwischen den verschiedenen Teil-Motoren eines Fahrantriebs (1, 2; 3, 4) und/oder des Lenkantriebs (9, 10) oder zwischen den verschiedenen Stromkreisen der Fahrantriebe und/oder des Lenkantriebs Feuerschotte vorgesehen sind.

9. Elektrisches Lenk- und Antriebssystem nach einem der vorangehenden Ansprüche, **dadurch gekennzeichnet, dass** an den Antriebswellen (13, 14) getrennt voneinander ansteuerbare mechanische Reibungsbremsen (22) vorgesehen sind.

10. Elektrisches Lenk- und Antriebssystem nach Anspruch 9, **dadurch gekennzeichnet, dass** zur Betätigung der Reibungsbremsen (22) eine weitere unabhängige Energiequelle vorgesehen ist.

## Claims

1. Electric steering and driving system for a lateral wheel steering vehicle, comprising driving elements for chains (15, 16) or for wheels, two drive shafts (13, 14), whereof one first end is connected to the driving element (15; 16) on respectively one side of the vehicle and whereof a second end is connected to the differential gear assembly (17), further comprising at least one traction drive (1, 2, 3, 4) which is connected to at least one of the two drive shafts (15, 16) and further comprising an electric steering drive (9, 10) in driving connection with the differential gear assembly (17),
**characterized in**
at least two mutually independent energy sources (19, 20, 21), all traction drives are power-able with electric current from at least one of these independent energy sources and the steering drive unit is power-able with electric current from another of these independent energy sources.

2. Electric steering and driving system for a lateral wheel steering vehicle, comprising driving elements for chains (15, 16) or for wheels, two drive shafts (13, 14), whereof one first end is connected to the driving element (15; 16) on respectively one side of the vehicle and whereof a second end is connected to the differential gear assembly (17), further comprising at least one traction drive (1, 2, 3, 4) which is connected to at least one of the two drive shafts (15, 16) and further comprising an electric steering drive (9, 10) in driving connection with the differential gear assembly (17),
**characterized in**
at least two mutually independent energy sources (19, 20, 21), all traction drives are power-able with electric current from at least one of these independent energy sources and that the steering drive unit consists of at least two electric motors (9,10) or of one electric motor with at least two mutually independent current circuits, whereas the at least two electric motors and the independent current circuits respectively are power-able with electric current from the at least two mutually independent energy sources (19, 20, 21).

3. Electric steering and driving system of claim 2, **characterized in that** the steering drive consists of at least two electric motors (9,10) or of one electric motor with at least two mutually independent electric circuits and for both drive shafts (15,16) of the vehicle at least one electric traction drive (1, 2, 3, 4) is provided.

4. Electrical steering and drive system of claim 1, **characterized in that** the steering drive consists of one electric motor (9) and respectively for both drive shafts (13, 14) of the vehicle at least one electric traction drive is provided, which respectively consists of at least two electric motors (1, 2; 3, 4) or of one electric motor with at least two mutually independent current circuits.

5. Electric steering and driving system of claim 1 or 2, **characterized in that** for both drive shafts (13, 14) of the vehicle at least one traction drive (1, 2, 3, 4) is provided, which respectively consists of at least two electric motors (1, 2; 3, 4) or of one electric motor with at least two mutually independent current circuits.

6. Electric steering and driving system according to one of the preceding claims, **characterized in that** at least one generator (20) is provided for power generation, which is propelled of at least one combustion engine (19).

7. Electric steering and driving system according to one of the preceding claims, **characterized in that** at least one of a fuel cell and an energy store (21) is provided as electric power source.

8. Electric steering and driving system according to one the preceding claims, **characterized in that** between the different part motors of a traction drive (1, 2; 3, 4) and/ or the steering drive (9, 10) or between the different current circuits of the traction drives and/ or the steering drive a fireproof bulkhead is provided.

9. Electric steering and driving system according to one of the preceding claims, **characterized in that** at the drive shafts (13, 14) mutually separately controllable mechanical friction brakes (22) are provided.

10. Electric steering and driving system of claim 9, **characterized in that** for operating the friction brakes (22) a further independent energy source is provided.

## Revendications

1. Système de direction et d'entraînement électrique pour un véhicule à direction par commande d'entraînement latéralement différenciée des roues, comprenant des éléments d'entraînement (15, 16) pour des chenilles ou pour des roues, et deux arbres d'entraînement (13, 14) dont la première extrémité est reliée à l'élément d'entraînement (15; 16) d'un côté latéral respectif du véhicule, et dont la deuxième extrémité est reliée à un agencement de transmission différentielle (17), l'ensemble comprenant également au moins un entraînement de marche (1, 2, 3, 4) qui est relié à au moins l'un des deux arbres d'entraînement (13, 14), ainsi qu'un entraînement de direction électrique (9, 10) qui est en liaison d'entraînement avec l'agencement de transmission différentielle (17),
**caractérisé**
**en ce que** sont prévues au moins deux sources d'énergie (19, 20, 21) indépendantes les unes des autres,
**en ce que** tous les entraînements de marche peuvent être alimentés en courant électrique à partir d'au moins une de ces sources d'énergie indépendantes, et
**en ce que** l'entraînement de direction peut être alimenté en courant électrique à partir d'une autre de ces sources d'énergie indépendantes.

2. Système de direction et d'entraînement électrique pour un véhicule à direction par commande d'entraînement latéralement différenciée des roues, comprenant des éléments d'entraînement (15, 16) pour des chenilles ou pour des roues, et deux arbres d'entraînement (13, 14) dont la première extrémité est reliée à l'élément d'entraînement (15; 16) d'un côté latéral respectif du véhicule, et dont la deuxième extrémité est reliée à un agencement de transmission différentielle (17), l'ensemble comprenant également au moins un entraînement de marche (1, 2, 3, 4) qui est relié à au moins l'un des deux arbres d'entraînement (13, 14), ainsi qu'un entraînement de direction électrique (9, 10) qui est en liaison d'entraînement avec l'agencement de transmission différentielle (17),
**caractérisé**
**en ce que** sont prévues au moins deux sources d'énergie (19, 20, 21) indépendantes les unes des autres,
**en ce que** tous les entraînements de marche peuvent être alimentés à partir d'au moins une de ces sources d'énergie indépendantes, et
**en ce que** l'entraînement de direction est constitué d'au moins deux moteurs électriques (9, 10) ou d'un moteur électrique avec au moins deux circuits de courants indépendants l'un de l'autre, lesdits au moins deux moteurs électriques ou respectivement circuits de courants indépendants pouvant être alimentés en courant électrique à partir des dites au moins deux sources d'énergie (19, 20, 21) indépendantes.

3. Système de direction et d'entraînement électrique selon la revendication 2, **caractérisé en ce que** l'entraînement de direction est constitué d'au moins deux moteurs électriques (9, 10) ou d'un moteur électrique avec au moins deux circuits de courant indépendants l'un de l'autre, et **en ce qu'**il est prévu pour les deux arbres d'entraînement (13, 14) du véhicule respectivement au moins un entraînement de marche électrique (1, 2, 3, 4).

4. Système de direction et d'entraînement électrique selon la revendication 1, **caractérisé en ce que** l'entraînement de direction est constitué d'un moteur électrique (9), et **en ce qu'**il est prévu pour les deux arbres d'entraînement (13, 14) du véhicule, respectivement un entraînement de marche électrique, qui est pour chacun constitué d'au moins deux moteurs électriques (1, 2; 3, 4) ou bien d'un moteur électrique avec au moins deux circuits de courant indépendants l'un de l'autre.

5. Système de direction et d'entraînement électrique selon la revendication 1 ou 2, **caractérisé en ce que** pour chacun des deux arbres d'entraînement (13, 14) du véhicule est prévu un entraînement de marche électrique, qui est constitué d'au moins deux moteurs électriques (1, 2; 3, 4) ou bien d'un moteur électrique avec au moins deux circuits de courant indépendants l'un de l'autre.

6. Système de direction et d'entraînement électrique selon l'une des revendications précédentes, **caractérisé en ce qu'**il est prévu au moins un générateur (20) pour la production de courant électrique, qui est entraîné par au moins un moteur à combustion interne (19).

7. Système de direction et d'entraînement électrique selon l'une des revendications précédentes, **caractérisé en ce qu'**il est prévu au moins une cellule à combustible ou un accumulateur d'énergie (21) en guise de source de courant électrique.

8. Système de direction et d'entraînement électrique selon l'une des revendications précédentes, **caractérisé en ce qu'**entre les différents moteurs partiels d'un entraînement de marche (1, 2; 3, 4) et/ou de l'entraînement de direction (9, 10), ou bien entre les différents circuits de courant des entraînements de marche et/ou de l'entraînement de direction, sont prévues des cloisons pare-feu.

9. Système de direction et d'entraînement électrique selon l'une des revendications précédentes, **caractérisé en ce que** sur les arbres d'entraînement (13; 14) sont prévus des freins mécaniques à friction (22) pouvant être commandés séparément les uns des autres.

10. Système de direction et d'entraînement électrique selon la revendication 9, **caractérisé en ce que** pour l'actionnement des freins à friction (22), il est prévu une autre source d'énergie indépendante.
